# EUROPEAN PATENT APPLICATION

(11) **EP 4 212 822 A1**
(43) Date of publication of application: **19.07.2023**
(21) Application number: 22151492.0
(22) Date of filing: 14.01.2022
(51) Int. Cl.: G01B 21/04

(54) **MAPPING OF SENSOR ERROR DATA FROM A COORDINATE POSITIONING MACHINE**

(71) Applicant: Renishaw PLC, Wotton-under-Edge, Gloucestershire GL12 8JR (GB)
(72) Inventor: PARKHE, Rishikesh, Dhananjay, 411057 Pune (IN); SOWOLE, Adedamola, Adeoluwafolahan, Hong Kong (HK)
(74) Representative: Brewer, Michael Robert

(57) **Abstract**

A method is described of generating a spatial map of sensor error data from a coordinate positioning machine. The method comprises: receiving measurement data collected by measuring or tracking an artefact as it is moved by the machine along at least one machine axis; deriving error data by comparing the received measurement data with expected or ideal values for the measurement data; and generating a spatial error map from the error data, with each cell comprising an error representation derived from multiple sources of error within the error data.

## Description

The present invention relates to spatial mapping of sensor error data from a coordinate positioning machine, such as a machine tool or coordinate measuring machine.

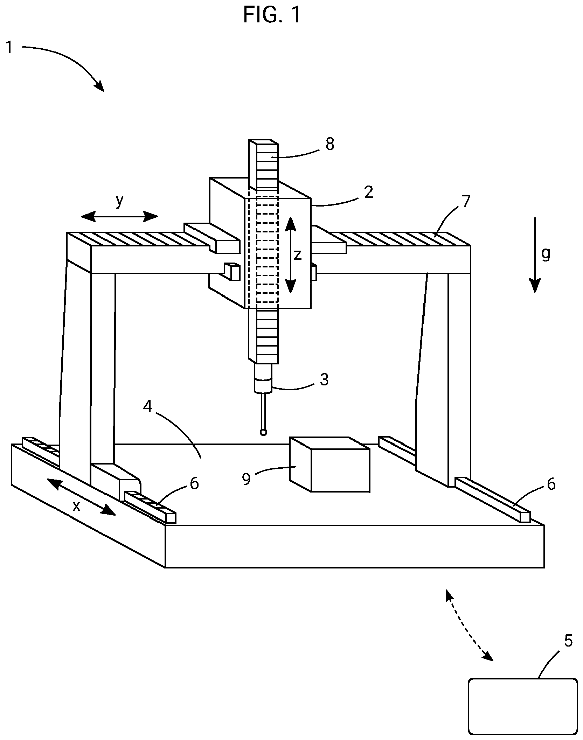

Figure 1 of the accompanying drawings shows a known type of coordinate measuring machine 1, having three linear axes x, y and z that are arranged orthogonally to one another in series, with the z axis being aligned with gravity g. A measurement probe 3 is mounted to a vertical column 8 which is slidable in the z direction within a carriage 2; this relative movement defines the z axis. The carriage 2 is itself supported on a horizontal beam 7 and is slidable in the y direction along the beam 7; this relative movement defines the y axis. In turn, the beam 7 is slidable in the x direction on a pair of rails 6; this relative movement defines the x axis. A computer controller 5 operates to drive each component (column 8, carriage 2, beam 7) along its corresponding respective axis to the appropriate position to place the measurement probe 3 in the desired position within the working volume of the machine, and to move it into a sensing relationship with a workpiece 9 which is supported on a fixed platform 4.

Each axis x, y, z is driven independently of each other axis by a corresponding respective motor (not shown). Each axis x, y, z is also encoded or sensed independently of each other axis by a corresponding respective sensor, with the outputs from the sensors being used to determine the position of the measurement probe 3 (or whatever tool is attached to the column 8). Each axis is provided with a length-measuring transducer having an encoder scale (depicted schematically in Figure 1 as a series of parallel lines along each axis) paired with a readhead (not shown). To measure relative movement between two parts, the encoder scale is mounted suitably to one part and the readhead is mounted suitably on the other part.

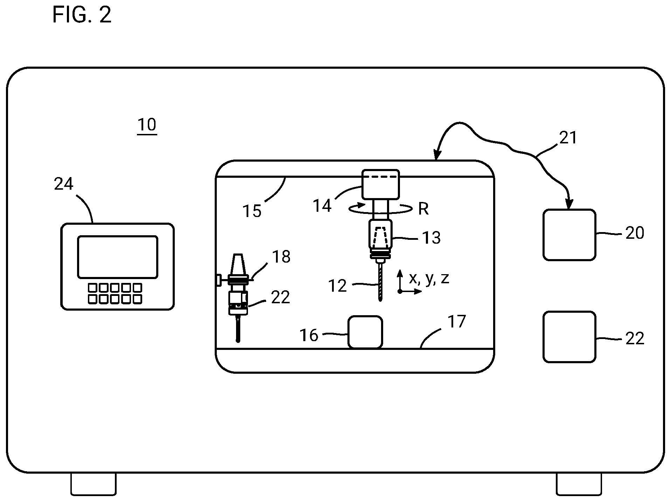

Figure 2 of the accompanying drawings is a schematic illustration of a machine tool 10, which would typically be installed in a factory or machine shop environment. The machine tool 10 is for performing machining operations on a workpiece 16, which is illustrated in Figure 1 as being loaded onto a base or bed 17 of the machine tool 10. The machine tool 10 comprises a spindle 13, into which a drill bit 12 for performing machining operations on the workpiece 16 is mounted. The spindle 13 is in turn supported by a support member 14 which is itself moved by a movement system 15, thereby enabling the drill bit 12 to be moved into position for working on the workpiece 16. The movement system 15 would typically provide for movement of the drill bit 12 in three degrees of freedom (along three axes) x, y, z, and the spindle 13 is controllable to rotate rapidly around its longitudinal axis R in order to cause the drill bit 12 to machine a feature in workpiece 16.

The movement system 15 is controlled by a machine controller 20, and these elements are connected via communications link 21, which is typically a wired connection. To the left side of the window of the machine tool 10 shown in Figure 2 is a tool holder or rack 18, which is shown holding a measurement probe 22. After the machine tool 10 has finished working on the workpiece 16, or has finished working on a particular feature of the workpiece 16, the machine controller 20 can be used to perform a series of movements which results in the drill bit 12 of Figure 2 being interchanged with the measurement probe 22, so that measurements of the workpiece 16 can be taken. Separately, the machine 10 also comprises a probe interface 22 for communicating with the probe 22, and a user interface 24 which is used by the machine operator to set up and program the machine tool 10 (for example the machine controller 20).

As noted above, the coordinate measuring machine 1 and the machine tool 10 shown respectively in Figures 1 and 2 both have a movement system comprising a series of linear axes of movement x, y, z. When the controller 5 of Figure 1, or the controller 20 of Figure 2, commands the machine to move along one of these axes x, y, z by a certain distance, this would ideally result in an actual movement of precisely that distance along the relevant axis. However, there are inevitably movement errors associated with each axis, such that the actual position will not be the same as the commanded position, i.e. there is a positional error. These positional errors must be measured so that they can be accounted for and calibrated out, and so that they do not have an effect on the positioning accuracy of the machine.

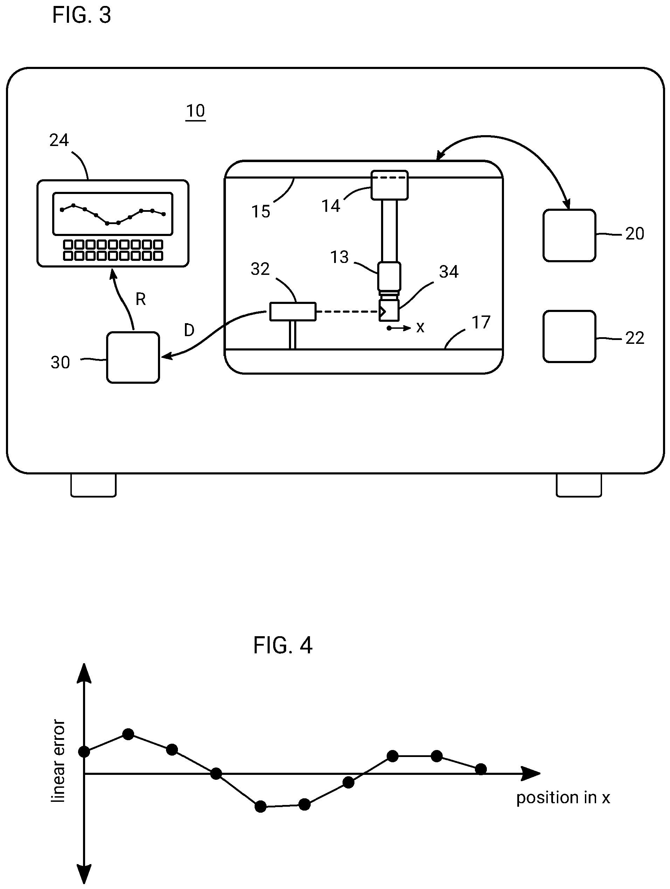

The XL-80 linear axis calibrator from Renishaw plc is provided for this purpose, and enables accurate measurement of actual linear displacement of the machine along a machine axis. Figure 3 shows the machine tool 10 with such a linear axis calibrator 32 in place. The calibrator 32 emits a laser beam to a target unit 34 supported on the spindle 13 (in place of the drill 12 or probe 22), which reflects the laser beam back to the calibrator 32. In the illustrated example, the target unit 34 is being moved along the machine's x axis, and measurement data D at various positions along this machine axis are sent to a processor 30 for processing.

From the received measurement data D, the processor 30 calculates the separation between the calibrator 32 and target unit 34 (or changes to that separation). A comparison between the actual linear displacement (as measured by the calibrator 32) with the expected linear displacement (as commanded by the machine controller 20) results in an error value for that position along the machine axis. These error values (which may also be referred to as sensor error data) are then sent to the user interface 24 as results R, and plotted on the user interface 24 so that the performance of the machine axis can be analysed, and so that appropriate action can be taken by the machine operator based on the error plot. Such a plot is depicted schematically in Figure 4 (and also on the user interface 24 in Figure 3), with the linear error values plotted against position along the x machine axis. Corresponding plots can also be produced for the y and z machine axes. Of course, some machines may only have a subset of machine axes, such as just a z axis, or just x and z axes.

Alongside the XL-80 and XM-60 calibrators, Renishaw plc also provides the CARTO software suite, which has three distinct modules: (a) Capture (for capturing measurement/error data from the machine); (b) Explore (for visualising and exploring the measurement/error data); and (c) Compensate (for performing error compensation, such as volumetric compensation, based on the measurement/error data). The present applicant has appreciated that it can be difficult, even for an experienced machine operator, to understand and interpret such error plots (for example using the Explore module of the CARTO software suite) and to draw appropriate technical conclusions from these error plots. It is desirable to address this issue to make it easier for the machine operator to make informed technical decisions based on machine axis error data.

According to a first aspect of the present invention, there is provided a method of generating a spatial map of sensor error data from a coordinate positioning machine, comprising: receiving measurement data collected by measuring or tracking an artefact as it is moved by the machine along at least one machine axis; deriving error data by comparing the received measurement data with expected or ideal values for the measurement data; and generating a spatial error map from the error data, with each cell comprising an error representation derived from multiple sources of error within the error data.

Each cell in the spatial error map may correspond to one of a plurality of positions within the machine, for example along the corresponding machine axis.

The multiple sources of error may comprise errors in two or more degrees of freedom associated with movement of the artefact.

The representation for each cell may be generated based on a transformation carried out in dependence upon the errors in the two or more degrees of freedom. The transformation may be a rotation and/or translation. The transformation may be a geometric and/or spatial and/or three-dimensional transformation.

The representation for each cell may be transformed, for example rotated and/or translated, relative to the representation for another cell in dependence upon a difference in the respective errors for those two cells in the two or more degrees of freedom.

The method may comprise providing the ability to generate a spatial error map from the error data in which each cell comprises an error representation derived from just a single source of error within the error data, such as a single degree of freedom.

The method may comprise controlling which one or more of the multiple error sources are used at any one time to generate the spatial error map.

The error representation may be a discrete and/or unitary error representation.

At least one of the error representations may be or be based on a cuboidal representation.

At least one of the error representations may be or be based on a square or rectangular representation.

The method may comprise displaying the spatial error map on a user interface.

The method may comprise collecting the measurement data by measuring or tracking the artefact as it is moved by the machine along at least one machine axis.

Generation of the spatial error map may be performed in real time, for example as or soon after the measurement data is collected.

The coordinate positioning machine may be a machine tool or a coordinate measuring machine. The coordinate positioning machine may be a linear positioning stage (sometimes referred to as just a linear stage) or a rotary positioning stage (rotary stage), whether as part of a larger motion system or as a motion system itself. The coordinate positioning machine may be a parallel kinematic machine having a plurality of positioning struts, or may be or comprise one or more struts of such a parallel kinematic machine, for example a hexapod having six such struts. Indeed, the coordinate positioning machine can be considered to be a motion system for a machine such as a machine tool or coordinate measuring machine or parallel kinematic machine (i.e. just the motion system itself, which may be manufactured quite separately from the rest of the machine).

The error representations associated with error data relating to movement along the or each machine axis may be adapted such that they are arrangeable and/or displayable along a single corresponding axis in the spatial error map, despite being derived from multiple different sources of error. The display and/or arrangement of these error representations may for example be on a user interface.

The method may comprise displaying and/or arranging error representations associated with error data relating to movement along the or each machine axis along a single corresponding axis in the spatial error map. The display and/or arrangement of these error representations may for example be on a user interface.

The single corresponding axis may be an axis within a multi-dimensional (e.g. three-dimensional) spatial error map.

The machine axis and/or error sources to be used to derive the spatial error map are selectable, for example by an operator of the machine.

It will be appreciated that, where information is presented to the user, the cognitive content of the information presented to the user (e.g. the spatial error map) relates to an internal state prevailing in a technical system (e.g. a machine tool) and enables the user to properly operate this technical system (e.g. machine tool), and accordingly it must be considered to have a technical effect. The internal state in this context can be considered to be the errors (in one or more degrees of freedom) associated with a movement system used by the system (e.g. machine tool). This can be considered to be a technical condition which is related to the internal functioning of the system, which may dynamically change and be automatically detected, and its presentation typically prompts the user to interact with the system, for example to avoid technical malfunctions.

Accordingly, the measurement data and/or error data can be considered to relate to an internal state prevailing in a technical system, the technical system being the coordinate positioning machine.

It is noted that an "axis" as described herein need not be arranged along a straight line but may be curved. The term "path" could be used instead of "axis" where appropriate (for example a "machine path" rather than a "machine axis").

According to a second aspect of the present invention, there is provided a method of operating a coordinate positioning machine, comprising: (a) generating a spatial error map using a method according to the first aspect of the present invention, or receiving such a spatial error map; and (b) identifying trends or patterns or regions in the spatial error map based on predetermined criteria.

The method may comprise controlling or configuring the machine based on the identified trends or patterns or regions.

The trends or patterns or regions may be identified substantially without human intervention. Or the trends or patterns or regions may be identified by a human operator based on the spatial error map, optionally based on guidance included in or added to or associated with the spatial error map. Such guidance may include, for example, highlighting or emphasising particular portions of the error map (such as those portions identified, based on predetermined criteria, as being actually or potentially problematic) or other messages or indications displayed to the machine operator.

According to a third aspect of the present invention, there is provided a data visualisation machine or a coordinate positioning machine adapted to perform a method according to the first aspect of the present invention.

According to a fourth aspect of the present invention, there is provided a computer program which, when run by a computer, causes the computer to perform a method according to the first or second aspect of the present invention. The program may be carried on a carrier medium. The carrier medium may be a storage medium. The carrier medium may be a transmission medium.

According to a fifth aspect of the present invention, there is provided computer-readable medium having stored therein computer program instructions for controlling a computer to perform a method according to the first or second aspect of the present invention.

According to a sixth aspect of the invention, there is provided a data carrier having instructions stored thereon, wherein the instructions, when executed by a processor, cause the processor to carry out a method according to the first or second aspect of the present invention.

Reference will now be made, by way of example, to the accompanying drawings, in which:
Figure 1, discussed hereinbefore, is schematic illustration of a Cartesian coordinate positioning machine having a motion system comprising three machine axes;
Figure 2, also discussed hereinbefore, is a schematic illustration of a machine tool having a motion system comprising three machine axes;
Figure 3, also discussed hereinbefore, shows the machine tool of Figure 2 with a linear axis calibrator for measuring linear errors in the machine axes;
Figure 4, also discussed hereinbefore, is a plot showing schematically how a linear error associated with one of the machine axes varies with position along the machine axis;
Figure 5 shows six separate plots each of which shows schematically how an error associated with a different one of six degrees of freedom varies with position along the machine axis;
Figure 6 shows a system according to an embodiment of the present invention, including a machine tool like that of Figure 2, a multi-axis calibrator for measuring errors in six degrees of freedom for motion along each machine axis, and a spatial error mapping derived from measurement data from the calibrator;
Figure 7 is a flowchart illustrating a method according to an embodiment of the present invention of generating a spatial error map of sensor data based on measurement data from the calibrator;
Figure 8 illustrates the concept of a spatial error map according to an embodiment of the present invention, based on a cuboid representation of the error values;
Figure 9 illustrates another type of spatial error map according to an embodiment of the present invention, based on a square representation of the error values;
Figure 10 shows a more detailed example of a user interface for presenting the spatial error map to a machine operator and for controlling the inputs used to generate the spatial error map and other aspects of its appearance;
Figure 11 is similar to Figure 10, and shows show how the spatial error map can be changed by various controls available to the machine operator; and
Figure 12 shows the same error values in graphical form as are represented in Figure 11 as a spatial error map.

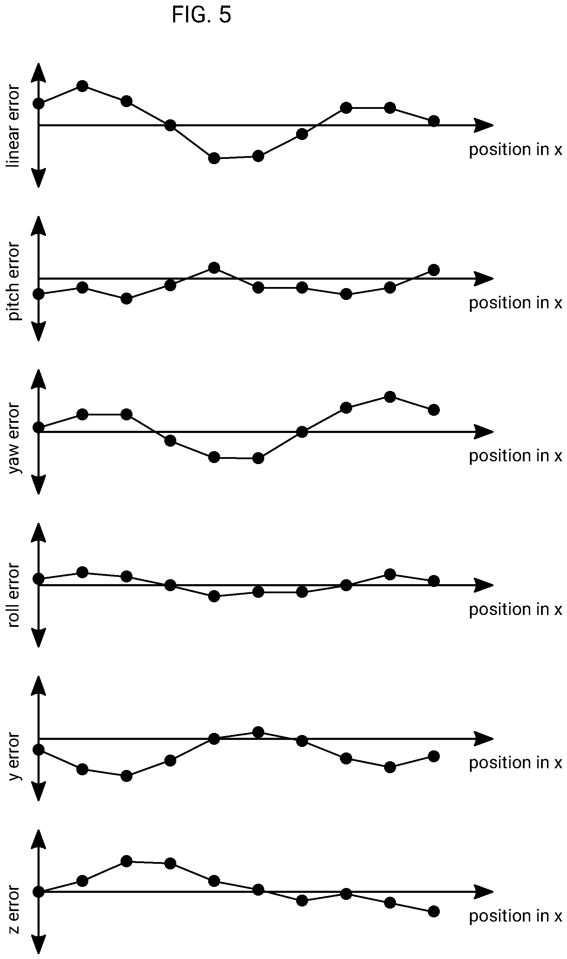

Problems associated with the interpretation of sensor error data from a machine were explained above with reference to Figure 3 and 4. The previous explanation was based measuring linear errors along the machine axis being calibrated. However, when a component such as the probe 3 or the drill 12 is moved by the machine's motion system along a single machine axis, in addition to the desired movement along that machine axis (i.e. the main linear degree of freedom), in practice there will also be unwanted movements in one or more of the other five degrees of freedom, potentially leading to errors in up to six degrees of freedom. The XM-60 multi-axis calibrator from Renishaw plc can measure errors in all six degrees of freedom: (1) linear; (2) pitch; (3) yaw; (4) roll; (5) horizontal straightness; and (6) vertical straightness. This results in six error plots, corresponding respectively to the six degrees of freedom, as depicted schematically in Figure 5. The present applicant has appreciated that it can be particularly difficult, even for an experienced machine operator, to understand and interpret six separate error plots and to draw appropriate technical conclusions from these error plots. This problem is even more pronounced than that described above for a single error plot such as is shown in Figure 4, and it is particularly desirable to make it easier for the machine operator to make informed technical decisions based on machine axis error data from multiple sources (e.g. multiple degrees of freedom).

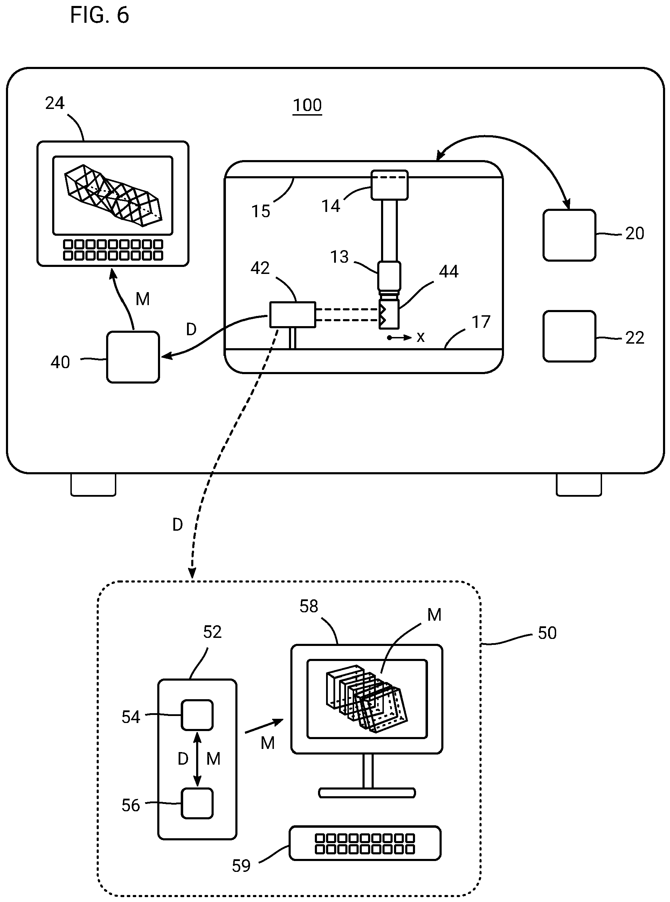

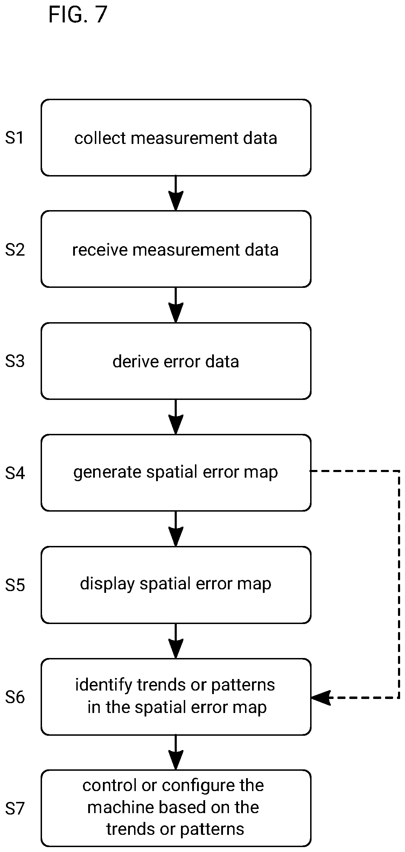

Figure 6 shows a machine tool 100 which incorporates an embodiment of the present invention. The machine tool 100 is similar to that of Figure 3, so that a detailed description of the common parts is not required. Instead of the linear calibrator 32 of Figure 3, a multi-axis calibrator 42 (such as the XM-60) is provided for measuring errors in six degrees of freedom for motion along each machine axis. Figure 7 is a flowchart illustrating a method according to an embodiment of the present invention of generating a spatial error map of sensor data based on measurement data from the calibrator 42.

As part of step S1 of Figure 7, the multi-axis calibrator 42 emits multiple laser beams to the receiving unit 44, which reflects these back to the calibrator 42. Resulting measurement data D are sent from the calibrator 42 to a processor 40 for processing and are received by the processor 40 in step S2 of Figure 7. In step S3, the processor 40 derives error data (which may also be referred to as sensor error data) from the measurement data and in step S4 generates a spatial error map.

The concept underlying a spatial error map according to an embodiment of the present invention is to represent multiple sources of error within the sensor error data using a single or unitary representation. In this respect, the spatial error map can be considered to have a plurality of cells, with each cell comprising an error representation derived from multiple sources of error within the error data. The term "positions" or "locations" or "coordinates" can alternatively be used instead of the term "cells". Each cell in the spatial error map corresponds to one of a plurality of positions within the machine (in this example a position along the associated machine axis). In the present example, the multiple sources of error comprise errors in two or more degrees of freedom associated with movement of the artefact (receiving unit 44) relative to the machine (as represented by the calibrator 42 which is fixed relative to the machine).

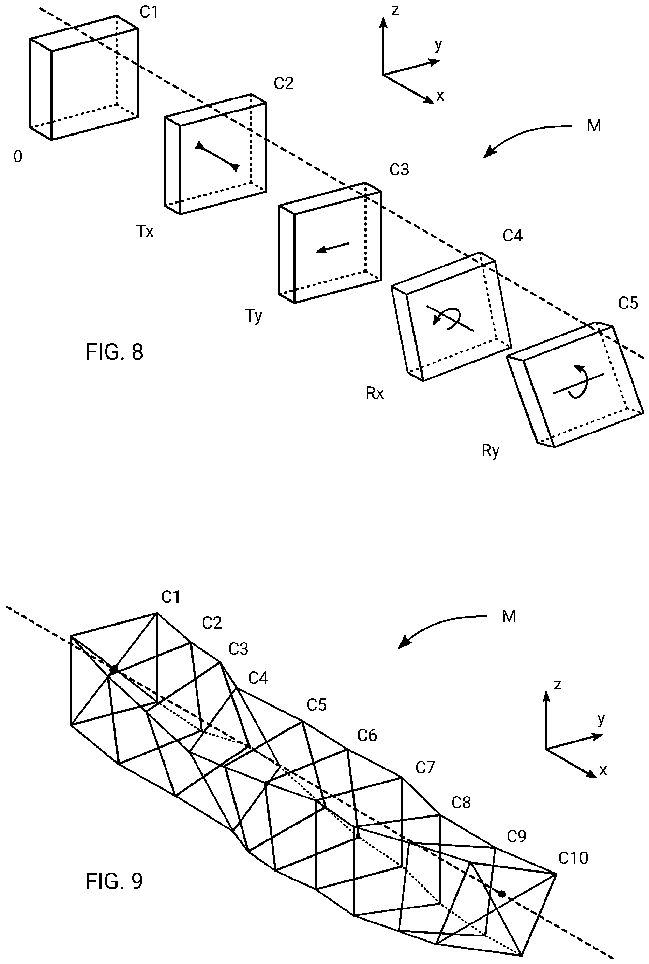

This will now be explained in more detail with reference to Figure 8, which shows five representative cells C1 to C5 of a spatial error map M generated from the error data D. Cell C1, at the top left of Figure 8, comprises an error representation corresponding to a starting position along the x machine axis, and each subsequent cell in the series corresponds to a different respective position along the x machine axis. The error representation for each cell in the spatial error map is in the form of a cuboid, which is distorted and/or translated and/or rotated based on the underlying error data from the calibrator 42.

For the starting position, the errors measured by the calibrator 42 are zero in all six degrees of freedom, and the error representation for this cell C1 in the spatial error map M is an undistorted cuboid having six flat faces in which all angles are right angles. For the next position along the x machine axis, the calibrator 42 measured an error in the x direction (a linear error along the x machine axis), with all other degrees of freedom still having measured errors of zero, and this is represented in cell C2 of the spatial error map M by a transformed (or deformed or distorted) version of the starting cuboid. In particular, the cuboid representation for cell C2 has a length in the x direction that is modified (reduced or increased) compared to that for cell C1 by an amount Tx that corresponds to the measured error value in the x direction. In the example shown, the cuboid of cell C2 is compressed in the x direction compared to the cuboid of cell C1. Alternatively, to derive the cuboid representation for cell C2, the cuboid of cell C1 could have been translated in the x (relative to a zero-error position along the x machine axis) without any change in dimensions, and indeed even for the cuboid for cell C2 as shown in Figure 8 it can be considered that one face (normal to the x axis) of the cuboid has been translated relative to the opposite such face by an amount Tx.

Similarly, for the next position along the machine axis, an error was measured in the y direction (horizontal straightness error) without any change to errors in other degrees of freedom (i.e. there is still the same error in the x direction represented in cell C2 as it was in cell C1). Accordingly, the cuboid representation for cell C3 is translated in the y direction relative to that for cell C2 by an amount Ty that corresponds to the measured error value in the y direction, without any further change in dimensions. Alternatively, to derive the cuboid for cell C3, the cuboid of cell C2 could have been stretched or shrunk in the y direction rather than (or as well as) merely translating in the y direction.

For the next position along the machine axis, corresponding to cell C4, a rotational error was measured around the x axis (roll error) without any change to errors in other degrees of freedom compared to cell C3. This is represented in cell C4 by a rotation of the cuboid from cell C3 by an amount Rx that corresponds to the measured rotational error value around the x axis. For the final position along the machine axis, corresponding to cell C5, an error was measured in a rotational sense around the y axis (pitch error) without any change to errors in other degrees of freedom compared to cell C4. This is represented in cell C5 by a rotation of the cuboid from cell C4 by an amount Ry that corresponds to the measured rotational error value around the y axis.

Figure 9 illustrates an alternative type of spatial error map embodying the present invention. The spatial error map of Figure 9 is based on performing translational and rotational transformations on a square (or rectangle) rather than a cuboid as per Figure 8, again based on the error values in six degrees of freedom, in an entirely analogous way to what is described above for the cuboid representations of Figure 8. Therefore, the error representation for each cell is, in the example shown in Figure 9, in the form of a square (or rectangle) that has been transformed (rotated and/or translated) based on the error values. A solid or semi-transparent surface can optionally be fitted around the resulting error representations to join the discrete representations together and to provide a more contiguous form of spatial error map M that may be easier to interpret in some cases.

Returning to the flowchart of Figure 7, having generated the spatial error map M in step S4 as described above, the spatial error map M is sent to and received by the user interface 24 (see Figure 6) and displayed on the user interface 24 in step S5. By considering the spatial error map M displayed on the user interface 24, in step S6 the machine operator can identify trends or patterns in the error data far more easily than would be possible using six separate error plots as shown in Figure 5. Additional guidance may be included in or added to or associated with the spatial error map M, including for example highlighting or emphasising particular portions of the spatial error map M (such as those portions identified, based on predetermined criteria, as being actually or potentially problematic) or other messages or indications displayed to the machine operator. Based on this analysis and review, in step S7 the machine operator can control or configure one or more aspects of the machine.

For example, the resulting spatial error map M shown in Figure 9 is rather like visualising how a sample square (or rectangular) artefact would be moved by the machine along the machine axis concerned, and this can provide valuable technical insight to the machine operator to assist in making technical assessments and decisions, for example to identify (step S6) that there is a specific issue with the drive mechanism along one part of the machine axis which is leading to an increased amount of combined roll and pitch, and to conclude that appropriate action needs to be taken (step S7) to address the identified technical problem.

It will be appreciated that displaying the spatial error map M is optional, as illustrated by the dotted path directly between steps S4 and S6 on Figure 7 (bypassing step S5), in which case steps S6 and S7 can be automated (e.g. carried out by processor 40). In this respect, it will be easier to determine trends and patterns automatically from a type of representation in which multiple error sources have been distilled into a single error representation for each cell position. In this respect, the error representation need not be a visual representation but could instead be a numerical representation of the multiple sources of error. 3 - 3

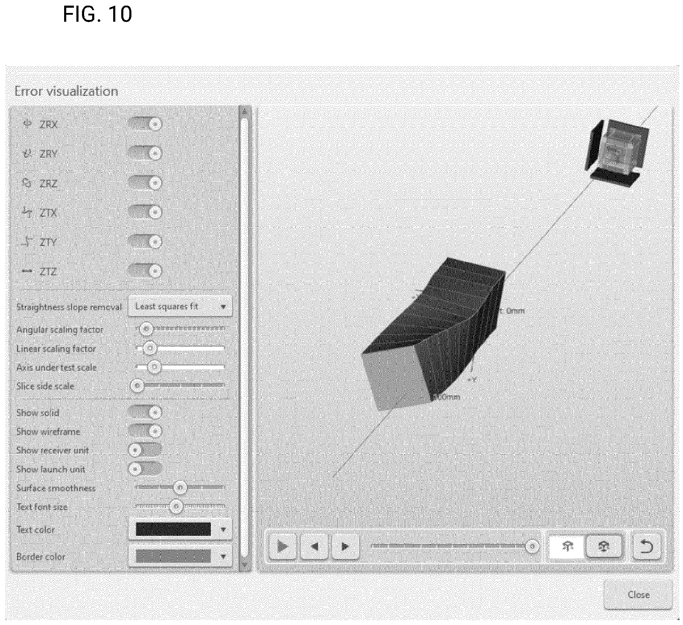

Figure 10 shows a more specific example of how the spatial error map M of Figure 9 can be presented on a display of the user interface 24. The spatial error map of Figure 10 is similar to that shown in Figure 9, with a solid surface added as mentioned above as being a possibility. To the left side of the display is a control panel having various controls available to the operator to customise the error map. For example, there are six switches labelled ZRX, ZRY, ZRZ, ZTX, ZTY, ZTZ corresponding respectively to the six degrees of freedom, where the first letter "Z" denotes that the error map relates to movement along the Z machine axis and where the subsequent letters denote the degree of freedom (e.g. "RZ" is rotation around the Z axis, i.e. a roll error for the Z axis, and "TZ" is translation along the Z axis, i.e. a linear error for the Z axis). These switches can be toggled on and off individually, and doing so will change the spatial error map so as to be based on only those degrees of freedom selected.

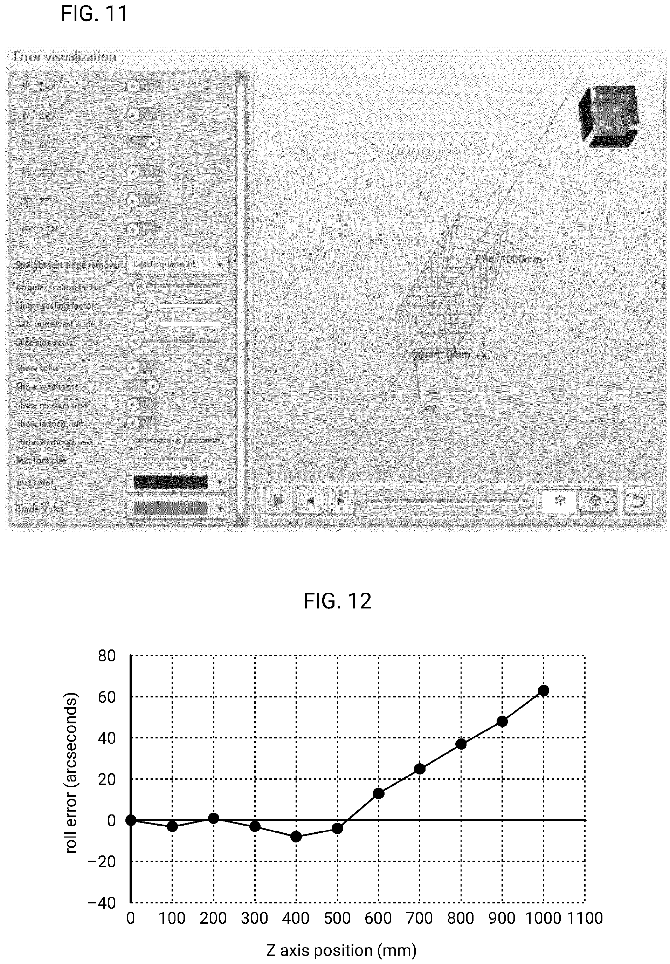

For example, Figure 11 shows the display on the user interface 24 when only the "ZRZ" switch is enabled (toggled to an "on" position). The spatial error map then shows the effect of only the roll error around the Z axis, and with errors in all other degrees of freedom ignored for the spatial error map. Figure 12 shows the conventional graphical plot corresponding to this error data, in a similar format to that of Figures 4 and 5. These toggle switches provide a powerful technical capability to explore the error data and to identify trends and patterns in the error data, enabling the machine operator to isolate certain degrees of freedom or combinations of degrees of freedom. This enables the machine operator to understand the error data at a more intuitive level and assists the machine operator to make correct technical assessments. For example, referring to Figure 11 the machine operator can easily understand that there is a technical problem associate with twisting (or rolling) of the moving machine part in the second part of the Z axis, which is not immediately apparent from the plot of Figure 12. By switching in other sources of error (errors in other degrees of freedom) the machine operator is able to explore combinations of errors and whether any of those combinations may be associated with a particular problem with the machine axis concerned.

It will be appreciated that the rotational (angular) and linear error values can be scaled appropriately to make them appear more exaggerated for visualisation purposes, for example so that the rotation of the square representation for each cell of the spatial error map may be more than is the case in reality. In practice, machine errors tend to be very small, and these would not necessarily be readily apparent in the spatial error map unless the errors are scaled up appropriately. For example, the rotational (angular) error measured in degrees may be scaled up by a factor of e.g. 3600, so that a measured rotational (angular) error of 10 arcseconds (where 1 arcsecond is equal to 1/3600 of a degree) would be represented in the spatial error map as a rotational (angular) rotation of 10 degrees. Slider controls for these scale factors are shown in the control panel to the left of Figures 10 and 11. The control panel also contains controls for other aspects of the spatial error map, such as whether to add the wireframe to the spatial error map (as shown in Figures 9 and 11) and whether to add a solid (shaded) surface around the spatial error map (as shown in Figure 10). Various other controls are available to control the appearance and content of the spatial error map.

It will be appreciated that, whilst two types of error representation for each cell of the spatial error map are illustrated in Figures 8 and 9 (a 3D cuboid and a 2D square, respectively), many other types of representation can be used instead. For example, different shapes could be used other than a cuboid or a square. The representation could also be colour-based, for example with different colours along the axis representing different error values from the various error sources (e.g. degrees of freedom). It can be considered that a common feature between these types of representation is that they can be arranged or displayed along a single axis (even when they are derived from multiple different sources of error), unlike for example the type of representation shown in Figure 5 which requires the multiple error values to be plotted along multiple different axes, with one axis for each source of error (degree of freedom). These various embodiments of the present invention provide a technical effect because each of them relates to an internal state prevailing in a technical system (e.g. errors in multiple different degrees of freedom along a machine axis of a machine tool) and enables the operator to properly operate this technical system.

It is noted that the processing of measurement data D and the generation of the spatial error map M could be performed in real time, as the measurements are being made by the calibrator 42. Or the measurement data D could be stored for later analysis. Furthermore, although processor 40 and user interface 24 are shown in Figure 6 as being part of the machine tool 100 itself, it will of course be appreciated that one or both of these components could be provided separately to the machine tool 100, for example implemented by a general-purpose computer that receives the measurement data D from the calibrator 42. These components can together be considered form a data visualisation machine, whether implemented by hardware or software or a combination of these. Such a computing system or data visualisation machine 50 is shown in Figure 6 separate from the machine tool 100 (the machine 50 may be remote from the site at which the machine tool 100 is located).

The machine 50 comprises a housing 52 in which a data storage device 54 and a CPU 56 are provided. The machine 50 also comprises a display device 58 and keyboard 59. The machine 50 receives measurement data D (wirelessly or by a direct link) from the calibrator 42 and stores it in the data storage device 54. Instructions from a computer program data held on the storage device 54 are sent to the CPU 56 and are executed by the CPU 56, which requests and receives the data D from the storage device 54 for processing. A spatial error map M is generated and stored back in the storage device 54 for subsequent analysis (e.g. to identify trends) and/or sent to the display device 58 for display thereon (to enable the user to manipulate and/or modify the spatial error map M using keyboard 59 and to interpret the error map M and make appropriate technical decisions based on these interpretations).

It will be appreciated that operation of the data visualisation machine (either as part of the machine tool 100 or provided separately as data visualisation machine 50) can be controlled by a program operating on the machine. Such a program can be stored on a computer-readable medium, or could, for example, be embodied in a signal such as a downloadable data signal provided from an Internet website. The appended claims are to be interpreted as covering a program by itself, or as a record on a carrier, or as a signal, or in any other form.

## Claims

1. A method of generating a spatial map of sensor error data from a coordinate positioning machine such as a machine tool, comprising:
receiving measurement data collected by measuring or tracking an artefact as it is moved by the machine along at least one machine axis;
deriving error data by comparing the received measurement data with expected or ideal values for the measurement data; and
generating a spatial error map from the error data, with each cell comprising an error representation derived from multiple sources of error within the error data.

2. A method as claimed in claim 1, wherein each cell in the spatial error map corresponds to one of a plurality of positions within the machine.

3. A method as claimed in claim 1 or 2, wherein the multiple sources of error comprise errors in two or more degrees of freedom associated with movement of the artefact.

4. A method as claimed in claim 3, wherein the representation for each cell is:
(a) generated based on a transformation, for example rotation and/or translation, in dependence upon the errors in the two or more degrees of freedom; and/or
(b) transformed, for example rotated and/or translated, relative to the representation for another cell in dependence upon a difference in the respective errors for those two cells in the two or more degrees of freedom.

5. A method as claimed in any preceding claim, comprising controlling which one or more of the multiple error sources are used at any one time to generate the spatial error map.

6. A method as claimed in any preceding claim, wherein generation of the spatial error map is performed in real time, for example as or soon after the measurement data is collected.

7. A method as claimed in any preceding claim, comprising collecting the measurement data by measuring or tracking the artefact as it is moved by the machine along at least one machine axis.

8. A method as claimed in any preceding claim, wherein the measurement data and/or error data relates to an internal state prevailing in a technical system, the technical system being the coordinate positioning machine.

9. A method as claimed in any preceding claim, wherein: (a) the error representation is a discrete and/or unitary error representation; and/or (b) at least one of the error representations is a cuboidal or square or rectangular representation.

10. A method as claimed in any preceding claim, wherein the error representations associated with the or each machine axis are adapted so as to be arrangeable and/or displayable along a single corresponding axis.

11. A method as claimed in any preceding claim, comprising: (a) displaying the spatial error map on a user interface; and/or (b) for the or each machine axis, displaying and/or arranging error representations associated with that machine axis along a single corresponding axis.

12. A method as claimed in any preceding claim, wherein the machine axis and/or error sources to be used to derive the spatial error map are selectable.

13. A method of operating a coordinate positioning machine, comprising: (a) generating a spatial error map using a method as claimed in any preceding claim, or receiving a spatial error map generated using a method as claimed in any preceding claim; and (b) identifying trends or patterns or regions in the spatial error map based on predetermined criteria.

14. A method as claimed in claim 13, comprising controlling or configuring the machine based on the identified trends or patterns or regions; and/or wherein the trends or patterns or regions are identified substantially without human intervention.

15. A data visualisation machine or a coordinate positioning machine adapted to perform a method as claimed in any preceding claim; or a computer program which, when run by a computer, causes the computer to perform a method as claimed in any preceding claim; or a computer-readable medium having stored therein computer program instructions for controlling a computer to perform a method as claimed in any preceding claim.
